# EUROPEAN PATENT APPLICATION

(11) **EP 4 651 530 A1**
(43) Date of publication of application: **19.11.2025**
(21) Application number: 25175850.4
(22) Date of filing: 12.05.2025
(51) Int. Cl.: H04W 8/12, H04W 48/18, H04W 60/00

(54) **TECHNIQUES FOR INDIRECT NETWORK SHARING**

(30) Priority: 15.05.2024 US 202418665385
(71) Applicant: Lenovo (Singapore) Pte. Ltd., 556741 (SG)
(72) Inventor: VELEV, Genadi, Morrisville (US)
(74) Representative: Marks & Clerk LLP

(57) **Abstract**

Various aspects of the present disclosure relate to techniques for indirect network sharing. An apparatus is configured to receive a first message for registering a UE with a participating network associated with a hosting network, transmit a second message comprising assistance information based at least in part on the received first message, wherein the assistance information comprises allowed NSSAI for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network, and transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.

## Description

### TECHNICAL FIELD

The present disclosure relates to wireless communications, and more specifically to techniques for indirect network sharing.

### BACKGROUND

A wireless communications system may include one or multiple network communication devices, such as base stations (BSs), which may support wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers, or the like). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., sixth generation (6G)).

### SUMMARY

An article "a" before an element is unrestricted and understood to refer to "at least one" of those elements or "one or more" of those elements. The terms "a," "at least one," "one or more," and "at least one of one or more" may be interchangeable. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

In one embodiment, an apparatus may be configured to receive a first message for registering a UE with a participating network associated with a hosting network, transmit a second message comprising assistance information based at least in part on the received first message, wherein the assistance information comprises allowed Network Slice Selection Assistance Information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network, and transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.

### BRIEF DESCRIPTION OF THE DRAWINGS

Figure 1 illustrates an example of a wireless communications system in accordance with aspects of the present disclosure.
Figure 2 illustrates an example architecture of 5G Multi-Operator Core Networks (5G MOCN) sharing the same next generation radio access network (NG-RAN), in accordance with aspects of the present disclosure.
Figure 3 illustrates an example architecture of 5G indirect network sharing, in accordance with aspects of the present disclosure.
Figure 4 illustrates an example of a 5G system roaming architecture for home routed scenario in service-based interface representation, in accordance with aspects of the present disclosure.
Figure 5 illustrates an example signal flow for a registration procedure of the UE to hosting network operator in case of indirect network sharing, in accordance with aspects of the present disclosure.
Figure 6 illustrates an example signal flow for protocol data unit (PDU) Session establishment for Indirect Network Sharing, in accordance with aspects of the present disclosure.
Figure 7 illustrates an example of a UE in accordance with aspects of the present disclosure.
Figure 8 illustrates an example of a processor in accordance with aspects of the present disclosure.
Figure 9 illustrates an example of a network equipment (NE) in accordance with aspects of the present disclosure.
Figure 10 illustrates a flowchart of a method performed by a device in accordance with aspects of the present disclosure.

### DETAILED DESCRIPTION

Wireless communication systems, such as 5G network systems, may implement network slicing. The concept of network slicing enables the network operators to divide ("slice") the network in finer granularity of complete networks, called network slices, to provide customized network connectivity (or network features) towards customers or application service providers.

A network slice is a logical network that comprises of a set of network functions and corresponding resources (e.g. computing, storage, networking) necessary to provide certain network capabilities and network characteristics. A network slice can include the Core Network (e.g., 5G core network, 5GC) control plane and user plane Network Functions (NFs), and an Access Network (e.g. 5G radio access network or fixed access network).

A UE can be configured with network slice relevant information, which is referred as NSSAI. The NSSAI may consist of one or more single NSSAIs (S-NSSAIs).

The UE requests registration to network slices by sending a NAS registration request message to the 5GC (e.g., an access and mobility management function (AMF)), including a Requested NSSAI containing a list of one or more S-NSSAIs to which the UE wants to register. The 5GC (e.g., AMF) may send the UE, in the registration accept message or in UE configuration update command message, one or more of the following elements related to the network slice configuration of the UE: 1) allowed NSSAI, 2) optionally, in case of roaming, a mapping of the allowed NSSAI to the home public land mobile network (HPLMN) S-NSSAI values, 3) a configured NSSAI, 4) optionally, in case of roaming, a mapping of the configured NSSAI to the HPLMN S-NSSAI values, 5) rejected NSSAI, or 6) pending NSSAI. The NSSAI may include a list of one or more S-NSSAIs.

One aspect of the network slicing configuration of the UE is that the serving operator (e.g., a visited PLMN (VPLMN)) can control, per Access Type, which NSSAI the UE includes in the Access Stratum (AS) when establishing a connection in response to a Service Request, Periodic Registration Update, or Registration procedure used to update the UE capabilities. In addition, the HPLMNs and VPLMNs can also instruct the UE to not include NSSAI in the AS, regardless of the procedure that causes a radio resource control (RRC) Connection to be established, e.g., to enable privacy for the NSSAI. The AMF sends to the UE an Access Stratum Connection Establishment NSSAI Inclusion Mode parameter, indicating whether and when the UE includes NSSAI information in the AS connection establishment (e.g., an RRC connection Establishment as defined in TS 38.331 (incorporated herein by reference)) according to one of these modes:
Mode a: the UE includes an NSSAI set to the Allowed NSSAI, if available, in the AS Connection Establishment caused by a Service Request, Periodic Registration Update, or Registration procedure used to update the UE capabilities.
Mode b: The UE includes a NSSAI that includes, for the case of AS Connection Establishment caused by a Service Request, an NSSAI including the S-NSSAI(s) of the Network Slice(s) that triggers the AS Connection Establishment, e.g., the S-NSSAIs of the PDU sessions that have the User Plane reactivated by the Service Request, or the S-NSSAIs of the Network Slices a Control Plane interaction triggering the Service Request is related to. For example, for session management (SM), it would be the S-NSSAI of the PDU Session the SM message is associated with.

Further, for mode b, the UE includes a NSSAI that includes, for the case of AS Connection Establishment caused by a Periodic Registration Update or Registration procedure used to update the UE capabilities, an NSSAI set to the Allowed NSSAI.

Mode c: the UE does not include an NSSAI in the AS Connection Establishment caused by Service Request, Periodic Registration Update, or Registration procedure used to update the UE capabilities.

Mode d: the UE does not provide NSSAI in the AS, e.g., to exclude the NSSAI, to refrain from transmitting the NSSAI, or the like.

More information about the network slices and 5GS can be found in 3GPP TS 23.501, V18.5.0, 2024-03 (incorporated herein by reference), and 3GPP TS 23.502, V18.5.0, 2024-03 (incorporated herein by reference).

In certain embodiments, indirect network sharing is based on the roaming architecture. In other words, the hosting network acts as a VPLMN and the participating network acts like a HPLMN. The UE's traffic is forwarded to the participating network by using home routed PDU session(s). However, the network slice configuration for roaming networks is not configured for this application because the UE acts as connecting and registering to home network, although the hosting network acts like a VPLMN. Accordingly, the current framework for network slicing support for roaming cannot be applied as is and enhancements to the VPLMN behavior are needed.

Aspects of the present disclosure are described in the context of a wireless communications system.

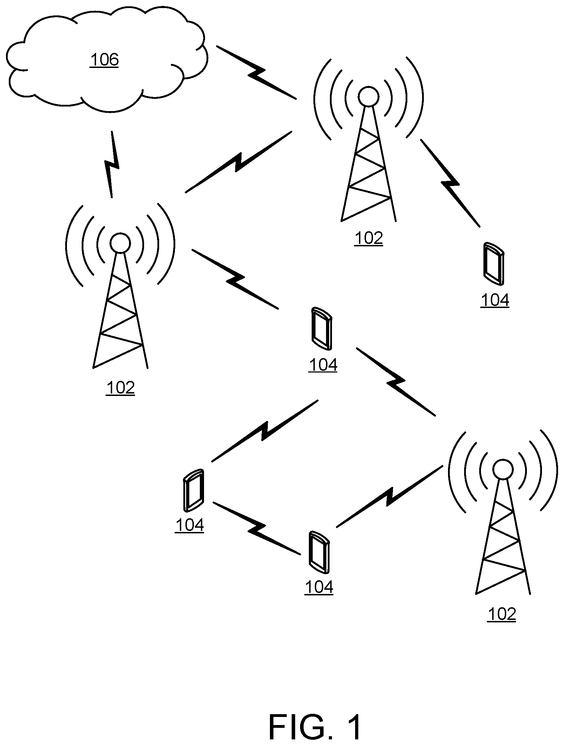

Figure 1 illustrates an example of a wireless communications system 100 in accordance with aspects of the present disclosure. The wireless communications system 100 may include one or more NE 102, one or more UE 104, and a core network (CN) 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a NR network, such as a 5G network, a 5G-Advanced (5G-A) network, or a 5G ultrawideband (5G-UWB) network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G, for example, 6G. Additionally, the wireless communications system 100 may support technologies, such as time division multiple access (TDMA), frequency division multiple access (FDMA), or code division multiple access (CDMA), etc.

The one or more NE 102 may be dispersed throughout a geographic region to form the wireless communications system 100. One or more of the NE 102 described herein may be or include or may be referred to as a network node, a base station, a network element, a network function, a network entity, a radio access network (RAN), a NodeB, an eNodeB (eNB), a next-generation NodeB (gNB), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with a non-terrestrial network (NTN). In some implementations, different geographic coverage areas 112 associated with the same or different radio access technologies may overlap, but the different geographic coverage areas may be associated with different NE 102.

The one or more UE 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link 114 may be referred to as a sidelink. For example, a UE 104 may support wireless communication directly with another UE 104 over a PC5 interface.

An NE 102 may support communications with the CN 106, or with another NE 102, or both. For example, an NE 102 may interface with other NE 102 or the CN 106 through one or more backhaul links (e.g., S1, N2, N2, or network interface). In some implementations, the NE 102 may communicate with each other directly. In some other implementations, the NE 102 may communicate with each other or indirectly (e.g., via the CN 106. In some implementations, one or more NE 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmit-receive points (TRPs).

The CN 106 may support user authentication, access authorization, tracking, connectivity, and other access, routing, or mobility functions. The CN 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more NE 102 associated with the CN 106.

The CN 106 may communicate with a packet data network over one or more backhaul links (e.g., via an S1, N2, N2, or another network interface). The packet data network may include an application server. In some implementations, one or more UEs 104 may communicate with the application server. A UE 104 may establish a session (e.g., a PDU session, or the like) with the CN 106 via an NE 102. The CN 106 may route traffic (e.g., control information, data, and the like) between the UE 104 and the application server using the established session (e.g., the established PDU session). The PDU session may be an example of a logical connection between the UE 104 and the CN 106 (e.g., one or more network functions of the CN 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (i.e., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. In some implementations, the first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (i.e., *µ=*0*, µ*=1, *µ=*2, *µ*=3, *µ*=4) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., OFDM symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UEs 104 may perform wireless communications over one or more of the operating frequency bands. In some implementations, FR1 may be used by the NEs 102 and the UEs 104, among other equipment or devices for cellular communications traffic (e.g., control information, data). In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

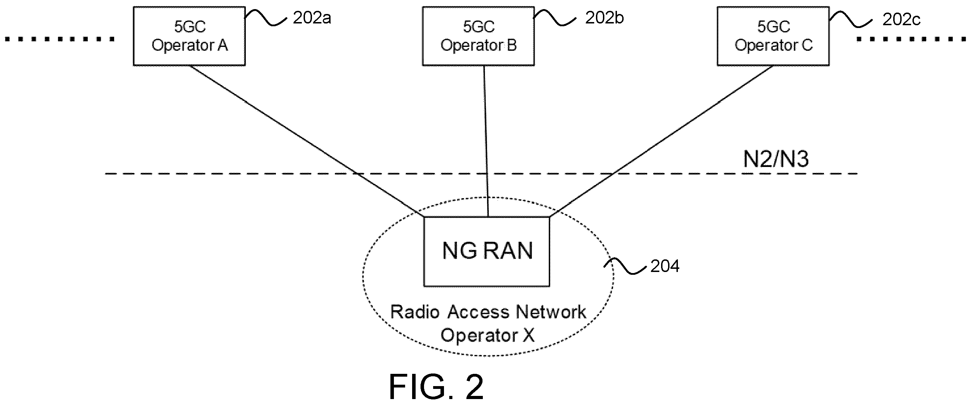

Figure 2 illustrates an example architecture of 5G MOCN sharing the same NG-RAN, in accordance with aspects of the present disclosure. In one embodiment, the 5GS allows for sharing of resources or functionalities between different network operators 202a-c. The 5GS specifies that multiple participating network operators 202a-c (referred to as mobile network operators (MNOs)) can share resources of a single shared network according to agreed allocation schemes. The shared network, in one embodiment, includes a radio access network 204. One example is shown on Figure 2 where the CNs (e.g. 5GCs) of operator A 202a, operator B 202b, and operator C 202c share RAN resources. This is known as 5G MOCN network sharing architecture where each core network (CN) of a participating operator is connected directly to the shared RAN.

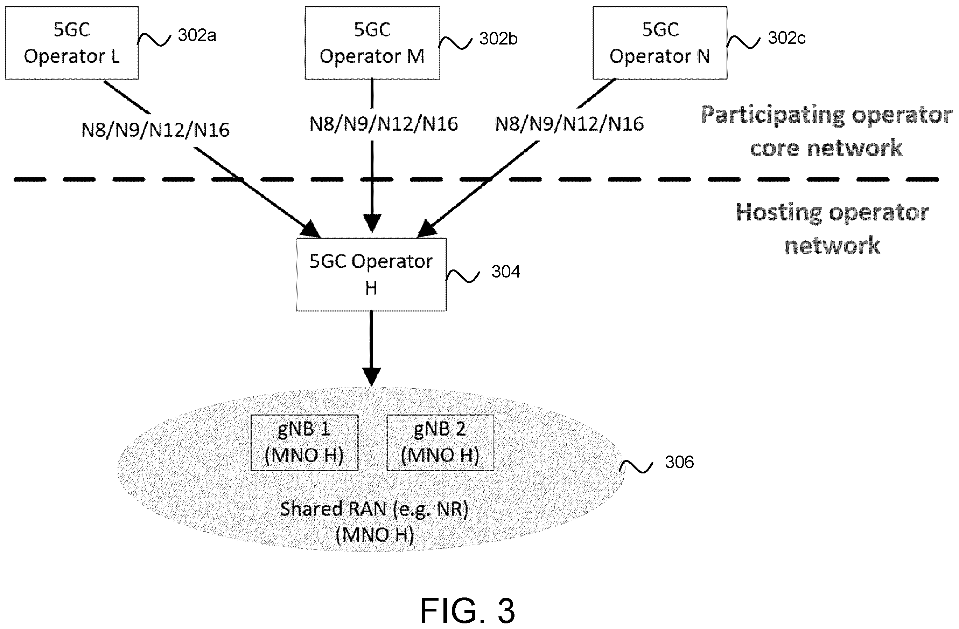

Figure 3 illustrates an example architecture of 5G indirect network sharing, in accordance with aspects of the present disclosure. In one embodiment, indirect network sharing deployment between a hosting operator 304 (e.g., shared network operator) and one or more participating operators 302a-c may be supported. This is shown in Figure 3 where a hosting operator "H" 304 shares its RAN and 5GC 306 to participating operators "L" 302a, "M" 302b, and "N" 302c. The communication between the shared RAN 306 and the core network of the participating operators "L" 302a, "M" 302b, and "N" 302c is routed through the core network of the hosting operator "H" 304 that connects to the shared RAN 306.

For Indirect Network Sharing, the shared RAN 306 broadcasts multiple PLMN IDs, including the PLMN ID that represents the hosting operator 304 and the PLMN IDs that represent participating operators 302a-c. Multiple PLMN IDs are supported by the serving AMF (e.g., the AMF in the core network of the PLMN representing the hosting operator 304).

A UE from a participating operator 302a-c can select the PLMN ID representing the participating operator 302a-c in the shared RAN 306 area based on existing procedures. The serving AMF selects core network functions in the PLMN of the participating operator for the UE, based on home routed roaming architecture principles, e.g., see 3GPP TS 23.501, V18.5.0, 2024-03. In addition, the serving AMF selects the session management function (SMF) of participating operator 302a-c possibly considering UE location information and also selects a V-SMF in its own network during the PDU session establishment procedure.

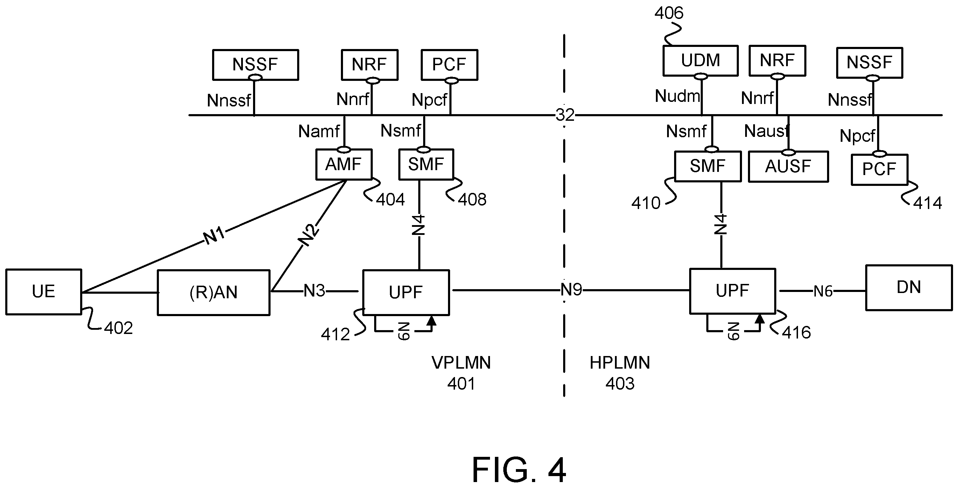

Figure 4 illustrates an example of a 5G system roaming architecture for home routed scenario in service-based interface representation, in accordance with aspects of the present disclosure. The UE 402 registers with the (serving) AMF 404 in the VPLMN 401. The AMF 404 retrieves the UE 402 subscription data from the UDM 406 in the HPLMN 403. When a home routed PDU Session is established, the AMF 404 in the VPLMN 401 selects both a) an SMF 408 in the VPLMN 401 called V-SMF and b) an SMF 410 in the HPLMN 403 called H-SMF. The AMF 404 forwards the PDU Session establishment request from the UE 402 to the V-SMF 408, which selects a UPF 412 in the VPLMN 401 and forwards the PDU Session establishment request to the H-SMF 410. The H-SMF 410 retrieves the PDU Session subscription data from the UDM 406, establishes SM policy association with the H-PCF 414, selects an anchor UPF 416 and sends a PDU Session establishment response (e.g., accept) message to the V-SMF 408.

In one embodiment for indirect network sharing, from the UE side, the UE in the area of the shared RAN selects a participating operator and the UE registers with the participating operator. The intermediate 5GC of the hosting operator is transparent to the UE. Correspondingly, procedures from the UE side are the same as if the UE registers and communicates directly with the participating operator. The participating operator can be either a HPLMN or VPLMN for the UE. The hosting operator's AMF (e.g., the serving AMF) needs to mimic an AMF behavior of the participating operator's 5GC to the UE, e.g., the network slice configuration towards the UE is set in a way as if it comes from the participating operator's 5GC. In one example, the Allowed NSSAI created and sent to the UE contains the S-NSSAI values of the participating operator. However, the serving AMF needs to behave similarly as the AMF in VPLMN towards the network functions (NFs) in the hosting operator and towards the shared RAN. The subject matter herein describes how the AMF, e.g., in the hosting MNO behaves and what information it provides to the shared RAN, the entities and NFs in the hosting operator's 5GC, and to the NFs in the participating operator's 5GC.

In one embodiment, the following is based on Figures 3 and 4 above. In one embodiment, this disclosure describes how the AMF in the hosting network applies a specific mode of operation as serving AMF in hosting network operator acting 1) towards the UE as AMF in the participating network (e.g., creating network configuration for the UE as if the UE is registering to the participating network, e.g., HPLMN); and 2) the AMF acts towards the NFs in the hosting network's 5GC and towards the RAN as AMF in a VPLMN (e.g., as if the UE is registered in a VPLMN).

In general, the AMF in a hosting operator may apply functionality as serving AMF in a hosting network. In one embodiment, the AMF determines (e.g., based on the service level agreement (SLA) between the hosting and participating network) that the UE is registering to a participating operator. The AMF may support "functionality as serving AMF in a hosting network" and therefore, the AMF may register itself or announce a specific profile (or capabilities) in the network repository function (NRF) or neighbor AMFs that the AMF supports the functionality of acting as serving AMF in a hosting network. Such functionality may be called serving AMF functionality in hosting network.

In one embodiment, the AMF does not provide configured NSSAI for the hosting network (e.g., configured NSSAI containing S-NSSAIs of the hosting operator) to the UE, e.g., based at least in part on or in response to a registration request message excluding, not providing, not including, or the like an NSSAI. Even if the UE sends no Requested NSSAI, the AMF doesn't create and provide configured NSSAI to the UE. Instead, the AMF provides the Allowed NSSAI. The AMF may provide the configured NSSAI for the participating operator (i.e. configured NSSAI containing S-NSSAIs of the participating operator), if the AMF is provisioned with such information.

In one embodiment, the AMF (or together with a Network Slice Selection Function (NSSF) in the hosting network) uses the Subscribed S-NSSAIs (e.g., received from the UDM, or from a source AMF, or stored from previous registration), a mapping/corresponding S-NSSAIs of the hosting network to S-NSSAIs from the participating network and locally available S-NSSAIs from the hosting network to determine the allowed NSSAI for the UE and/or partially allowed NSSAI for the UE including the S-NSSAIs of the participating operator, e.g., to be sent to the UE. Further, the AMF may create a rejected S-NSSAI(s) of the participating operator, if some of the UE requested S-NSSAI(s) are not supported in the hosting network (e.g., there are no available corresponding S-NSSAI of the hosting network).

In one embodiment, the AMF uses the Subscribed S-NSSAIs (e.g., received from the UDM, or from a source AMF, or stored from previous registration), a mapping/corresponding S-NSSAIs of the hosting network to S-NSSAIs from the participating network and locally available S-NSSAIs from the hosting network to determine the allowed NSSAI for the hosting operator (or partially allowed NSSAI for the hosting operator), e.g., containing S-NSSAI values of the hosting operator mapping to the S-NSSAI values of the participating operator. The allowed NSSAI for the hosting operator (or partially allowed NSSAI for the hosting operator) are used only internally in the hosting network. The Allowed NSSAI for the hosting operator is stored locally in the AMF and can correspond to "Mapping of Allowed NSSAI" that includes mapping of each S-NSSAI of the participating MNO to S-NSSAI of the hosting MNO.

In one embodiment, the AMF configures mode "d" (described above) for the operator-controlled inclusion of NSSAI in AS signaling, which means that the UE shall not provide NSSAI in the AS.

In one embodiment where Network Slice AS Groups (NSAGs) are used in the NG-RAN and configured in the AMF, and the UE indicated support of NSAG, the AMF provides to the UE the NSAG information. As used herein, an NSAG identifies a network slice or set of network slices within a tracking area (TA). In one embodiment, the AMF provides the NSAG identifier from the hosting operator corresponding to the S-NSSAI(s) of the hosting operator, where each NSAG identifier is associated with one or more S-NSSAIs of the participating operator included in the allowed NSSAI for the UE and/or partially allowed NSSAI for the UE. The AMF internally creates a mapping between the S-NSSAI of the participating operator to an S-NSSAI of the hosting operator, so that the AMF can determine which NSAG identifier of the hosting operator associates with S-NSSAI of the participating operator.

In one embodiment, the AMF uses the Allowed NSSAI for the hosting operator in the signaling to the PCF for AM policy establishment. In one embodiment, the AMF sends to the RAN the Allowed NSSAI for the hosting operator in an N2 signal, whereas the AMF sends to the UE in the registration accept message the allowed NSSAI for the UE and/or partially allowed NSSAI for the UE.

In one embodiment, during PDU Session establishment procedure initiated by the UE, the AMF inserts the S-NSSAI of the hosting operator (corresponding to the S-NSSAI of the participating operator included by the UE in the NAS request message) in the request message to the SMF for SM creation.

It is noted that the description uses the term PLMN as public network, but the solution may also apply to non-public networks, e.g., standalone non-public networks (SNPNs). It is also noted that the hosting operator is identified by hosting operator PLMN ID and the participating operator is identified by participating operator PLMN ID.

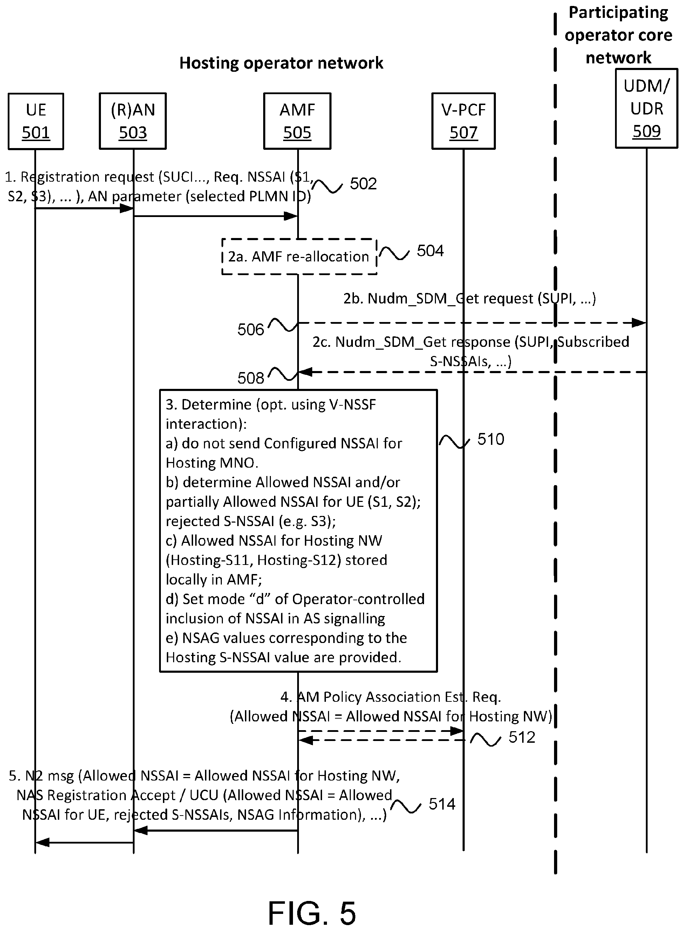

Figure 5 illustrates an example signal flow for a registration procedure of the UE to hosting network operator in case of indirect network sharing, in accordance with aspects of the present disclosure. In particular, Figure 5 shows the signal flow of how the AMF derives and stores allowed NSSAI for the hosting operator and how the AMF provides this information to the PCF, to the RAN or other entities of the hosting network.

At 1 (see messaging 502), in one embodiment, the UE 501 selects a PLMN ID broadcasted by the cell of the shared RAN 503. The UE 501 creates and sends a registration request message included in access stratum RRC signalling to the RAN node. The UE 501 also indicates the selected PLMN ID to the RAN node. The registration request message may include the Subscription Concealed Identifier (SUCI) and a Requested NSSAI. In one example, the Requested NSSAI may contain the S-NSSAI values S1, S2 and S3, e.g., of the participating operator. The UE 501 uses locally stored Configured NSSAI of the participating operator PLMN ID. In one embodiment, the RAN node (e.g. gNB) selects an AMF 505, creates an N2 message and sends the N2 message to the selected AMF 505. The AN parameters may include the selected PLMN ID as indicated by the UE 501.

At 2a (see block 504), in one embodiment, the AMF 505 determines, based on the indicated selected PLMN ID, that the UE 501 is registering to a participating network operator identified by the indicated selected PLMN ID. The AMF 505 determines to apply a specific functionality for acting as a serving AMF in the hosting operator network. In one embodiment, the subscriber concealed identifier (SUCI) includes the Home Network Identifier (HNI), and optionally the Routing Indicator, which are used by the AMF 505 to identify which is the HPLMN and where the UDM 509 holding the UE credentials is located. The HNI and the selected PLMN ID may identify different networks. If the UE 501 hasn't been authenticated yet, the AMF 505 may perform a primary authentication and authorisation procedure.

In one embodiment, if the AMF 505 that is selected by the RAN 503 doesn't support the requested NSSAI or doesn't support functionality for serving AMF functionality in the hosting network, the AMF 505 may use an AMF redirection (re-allocation) procedure to another AMF 505 which supports the serving AMF functionality in the hosting network. It is noted that an AMF 505 supporting the functionality for AMF in hosting network may register this functionality in its profile in the NRF, so that other AMFs can discover the AMF 505. Optionally, the AMF 505 supporting the functionality for AMF in hosting network may configure neighbor AMFs 505 with this information via a direct signalling.

At 2b (see signalling 506), in one embodiment, if the AMF 505 doesn't have the UE's Subscription data, the AMF 505 selects a UDM 509 in the participating network and the AMF 505 requests from UDM 509 the UE subscription data. The AMF 505 may use the service operation Nudm_SDM_Get request and include the SUPI. The AMF 505 may obtain the SUPI from the primary authentication and authorization procedure.

At 2c (see messaging 508), in one embodiment, the UDM 509 determines, e.g., based on the hosting PLMN ID, that the UE 501 registers with the hosting network wherein Indirect Network Sharing may be used. The UDM 509 sends a response message including the UE Subscription data. The UDM 509 may derive a list of Subscribed S-NSSAIs and or subscribed data network names (DNNs), which are applicable in case of Indirect Network Sharing and/or in the specific hosting network. The UDM 509 may consider the SLA between the participating operator and the hosting operator to derive the subscribed S-NSSAIs and/or DNNs to be sent in the UE Subscription data.

Furthermore, the UDM 509 may send other subscribed parameter values that are applicable to the current hosting network, e.g., UE-aggregate maximum bit rate (AMBR), which is lower than the UE-AMBR to be used in the participating network operator and/or services excluded from the UE subscribed services (e.g. multicast-broadcast services (MBS), location services, ProSe services, or the like) to be offered during the indirect network sharing.

At 3 (see block 510), in one embodiment, the AMF 505 applies the following functionality, which is specific for a serving AMF 505 in a hosting network. Please note that step 3 shows an AMF 505 only, but in one embodiment it is also possible that the AMF 505 uses the NSSF services as well. In one embodiment, the Subscribed S-NSSAIs that is sent within the UE Subscription data may be different from the configured NSSAI which the participating operator may have configured in the UE. In such case, the AMF 505 needs to create (alone or with the interaction with the NSSF in the hosting network) allowed NSSAI and rejected S-NSSAIs based on the list of Subscribed S-NSSAIs and the Requested NSSAI by the UE 501, but without sending a Configured NSSAI for the hosting network.

In one embodiment, the AMF 505 does not provide configured NSSAI for the hosting MNO to the UE 501. Even if the UE 501 does not send a Requested NSSAI, the AMF 505 doesn't create and provide Configured NSSAI to the UE 501. But the AMF 505 will provide an Allowed NSSAI having the S-NSSAIs of the participating operator. In one embodiment, the AMF 505 uses the Subscribed S-NSSAIs (e.g., received from the UDM 509, or from a source AMF 505, or stored from a previous registration) to determine the values of the S-NSSAIs of the hosting operator mapping to the subscribed S-NSSAIs. The AMF 505 further determines which of the S-NSSAIs of the hosting operator are available and/or supported in the current TA and potential registration area. The AMF 505 considers the available and/or supported S-NSSAIs of the hosting operator and takes the corresponding S-NSSAIs of the participating operator to be included in the Allowed NSSAI for the UE 501 and/or partially Allowed NSSAI for the UE 501. In other words, the AMF 505 includes S-NSSAIs of the participating operator (e.g., intended to be the HPLMN S-NSSAI values) in the Allowed NSSAI for the UE 501 and/or partially Allowed NSSAI for the UE 501. In such an embodiment, the AMF 505 may create a list of rejected S-NSSAI(s) of the participating operator to be sent the UE 501, if some of the UE requested S-NSSAI(s) are not supported in the hosting network (e.g., there are no available corresponding S-NSSAI(s) of the hosting network). One example of how the Allowed NSSAI for the UE and/or partially Allowed NSSAI for the UE are created is shown in step 5.

In one embodiment, the AMF 505 determines Allowed NSSAI for the hosting network operator that contains S-NSSAI values of the hosting operator mapping to the S-NSSAI values of the participating operator included in the Allowed NSSAI for the UE 501 and/or partially Allowed NSSAI for the UE 501. If the AMF 505 creates partially Allowed NSSAI for the UE 501, the AMF 505 may also create a corresponding partially Allowed NSSAI for the hosting network. The Allowed NSSAI for the hosting network or partially Allowed NSSAI for the hosting network is stored locally in the AMF 505 and can be similar to the "Mapping Of Allowed NSSAI" information that is derived in an AMF 505 in the VPLMN in a roaming case. While the "Mapping Of Allowed NSSAI" information is derived to be sent to the UE 501 and includes the mapping of each S-NSSAI of the VPLMN to an S-NSSAI of the HPLMN, the Allowed NSSAI for the hosting network (or partially Allowed NSSAI for the hosting network) is only used in the hosting network domain. The Allowed NSSAI for the hosting network (or partially Allowed NSSAI for the hosting network) may include a list of S-NSSAIs valid in the hosting network and corresponding to the list of S-NSSAIs included in the Allowed NSSAI for the UE 501 and/or partially Allowed NSSAI for the UE 501.

In other words, the AMF 505 stores in the UE 501 context two types of allowed NSSAI: Allowed NSSAI for the UE 501 and/or partially Allowed NSSAI for the UE 501 sent to the UE 501 and Allowed NSSAI for the hosting network that is used in the signaling to other NFs in the hosting network and to the shared RAN 503.

In one example in this disclosure, it is assumed that the shared RAN 503 is configured with network slicing (e.g., NSSAI) information of the hosting network, whereas the UE 501 is configured with NSSAI information of the participating network. In one embodiment, the RAN 503 uses the NSSAI information from the AS signaling to select an AMF 505 or to apply RAN internal congestion or overload processing; however, the NSSAI information provided by the UE 501 is for the participating network. Thus, in such an embodiment, the AMF 505 configures the UE 501 to not provide NSSAI information in the AS signaling. In other words, the AMF 505 configures mode "d" for the operator-controlled inclusion of NSSAI in AS signaling, e.g., as described in clause 5.15.9 in 3GPP TS 23.501, V18.5.0, 2024-03.

In one embodiment, the shared RAN 503 may apply NSAGs for cell (re-)selection or for random access control, e.g., as described in clause 5.15.14 in 3GPP TS 23.501, V18.5.0, 2024-03. In such an embodiment, the RAN 503 has configured the AMFs 505 of the hosting network with the NSAG information. The serving AMF 505 creates and provides to the UE 501 capable of NSAG (e.g., the UE 501 has indicated support of NSAG in the 5GMM information element in step 1) the NSAG values corresponding to the Hosting S-NSSAIs values, which map to the HPLMN S-NSSAI values of the participating MNO.

At 4 (see messaging 512), in one embodiment, the AMF 505 establishes access and mobility (AM) policy association with the PCF 507. The AMF 505 sends to the PCF 507 a request message for AM policy association establishment which includes Allowed NSSAI for the hosting operator (e.g., not the Allowed NSSAI for the UE 501), and other parameters such as the subscribed RAT/Frequency Selection Priority (RFSP) or UE-AMBR.

In one embodiment, the PCF 507 uses the Allowed NSSAI for the hosting operator to derive RFSP applicable for the shared RAN 503 based on the slices of the hosting operator. However, the network slices sent to the UE 501 include values of the network slices of the participating operator.

At 5 (see messaging 514), in one embodiment, the AMF 505 creates and sends a NAS registration accept message to the UE 501. The NAS registration accept message is encapsulated in N2 message to the RAN 503. In one embodiment, the AMF 505 creates an N2 message and includes the Allowed NSSAI for hosting network for the RAN 503. This allows the RAN 503 to apply policy for cell selection and steering according to the S-NSSAIs of the hosting network.

In one embodiment, the NAS registration accept message includes the Allowed NSSAI for the UE 501 and/or partially Allowed NSSAI for the UE 501, any of them having the S-NSSAIs of the participating network. The AMF 505 may provide the configured NSSAI for the participating operator (e.g., configured NSSAI containing S-NSSAIs of the participating operator), if the AMF 505 is provisioned with such information. The NAS registration accept message may also include a list of rejected S-NSSAIs where the S-NSSAI values are the S-NSSAIs of the participating network. Each rejected S-NSSAI is associated with a reject cause value indicating the reason for rejections, e.g., rejected in the whole PLMN, or rejected in the registration area, or partially rejected for some TA part of the registration area. In the specific scenario of Indirect Network Sharing, the AMF 505 in the hosting network may apply different logic for the reject causes, e.g., instead of "rejected for the whole PLMN", the AMF 505 may use "rejected in the registration area". In this manner, from the UE 501 perspective, the registered PLMN is the participating operator PLMN and the UE 501 may leave the Shared RAN 503 and move the RAN of the participating network where the rejected S-NSSAI may be available.

In one example, the UE may have requested to use network slices S-NSSAI#S1, S-NSSAI#S2 and S-NSSAI#S3 (which may be part of the configured NSSAI for the participating network). The AMF 505 may receive Subscribed S-NSSAIs indicating S-NSSAI#S1, S-NSSAI#S2, which means that the AMF 505 may only allow S-NSSAI#S1, S-NSSAI#S2 for the UE 501. The AMF 505 may include the S-NSSAI#S1, S-NSSAI#S2 in the Allowed NSSAI for the UE 501 and/or partially Allowed NSSAI for the UE 501. The AMF 505 rejects the requested S-NSSAI#S3 with a cause value indicating that it is not supported in the registration area. Furthermore, the AMF 505 determines the S-NSSAI of the hosting network that corresponds to the S-NSSAIs of the participating network included in the Allowed NSSAI for the UE 501 and/or partially Allowed NSSAI for the UE 501. For example, the S-NSSAI#S1 corresponds to S-NSSAI#S11 and the S-NSSAI#S2 corresponds to S-NSSAI#S12. So, the AMF 505 creates Allowed NSSAI for hosting network operator including S-NSSAI#S11 (corresponding/mapping to S-NSSAI#S1) and S-NSSAI#S12 (corresponding/mapping to S-NSSAI#S2).

In one embodiment, another reason for the serving AMF 505 to reject the requested S-NSSAI#S3 may be that the there is no available corresponding S-NSSAI of the hosting network that can map to S-NSSAI#S3.

In one embodiment, in the NAS registration accept message, the AMF 505 may include NSAG information as described in step 3. The AMF 505 creates the NSAG information using the NSAG identifier as used/configured by the shared RAN 503 and the corresponding S-NSSAI list of the NSAG identifier, where the S-NSSAI list contains one or more S-NSSAIs with values of the participating network that map to the hosting network's S-NSSAI that were configured in the AMF 505.

In one embodiment, the NSAG information parameter can be formatted as shown in Table 1, which shows multiple NSAG elements, e.g., NSAG 1, NSAG 2, or the like.

**Table 1: NSAG information parameter**

| NSAG information IEI | octet 1 |
|---|---|
| Length of NSAG information contents | octet 2 |
| | octet 3 |
| NSAG 1 (hosting network) | octet 4 |
| | octet m |
| NSAG 2 | octet m+1* |
| | octet n* |
| ... | octet n+1* |
| | octet u* |
| NSAG x | octet u+1* |
| | octet v* |

In one embodiment, each NSAG element may contain the information as shown in Table 2. Table 2 shows the NSAG element format where an NSAG identifier may be associated with one or more S-NSSAIs of the hosting network operator.

**Table 2: NSAG element format**

| 8 | 7 | 6 | 5 | 4 | 3 | 2 | 1 | |
|---|---|---|---|---|---|---|---|---|
| Length of NSAG | | | | | | | | octet 4 |
| NSAG identifier (hosting network) | | | | | | | | octet 5 |
| S-NSSAI list of NSAG (participating network) | | | | | | | | octet 6 |
| | | | | | | | | octet j |
| NSAG priority | | | | | | | | octet j+1 |
| TAI list | | | | | | | | octet j+2* |
| | | | | | | | | octet m* |

In the specific scenario of Indirect Network Sharing, the AMF 505 would create NSAG elements having the NSAG identifier value of the hosting network (e.g., as configured from the RAN 503 to the AMF 505) and the S-NSSAI list would include the S-NSSAI of the participating operator include in the Allowed NSSAI for the UE 501 and/or partially Allowed NSSAI for the UE 501 sent to the UE 501.

In this manner, the AMF 505 in the hosting network plays two roles - towards the UE 501, the AMF 505 behaves as an AMF 505 in the participating network (e.g., HPLMN), and towards the NFs and RAN of the hosting network, the AMF 505 behaves similarly as an AMF 505 in VPLMN.

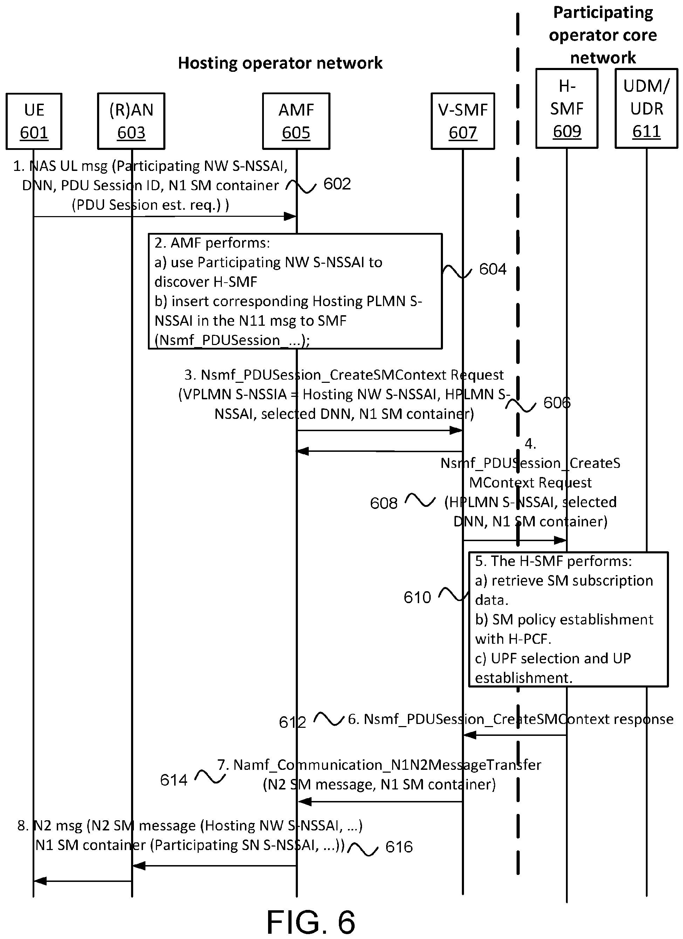

Figure 6 illustrates an example signal flow for PDU Session establishment for Indirect Network Sharing, in accordance with aspects of the present disclosure. In one embodiment, the network slice availability information is provided to the PCF by the UDR. The UDR is configured to maintain and store the network slice availability information per S-NSSAI. For example, the UDR may store network slice availability information in network slice related policy control requirements (e.g., (Remaining) Maximum Slice Data Rate for UL and DL value may be stored in the UDR)).

At 1 (see messaging 602), in one embodiment, the UE 601 sends a NAS uplink message containing at least the following parameters: S-NSSAI = Participating NW S-NSSAI, DNN, PDU Session ID, and/or N1 SM container (PDU Session establishment request message).

At 2 (see block 604), in one embodiment, the AMF 605 uses the received S-NSSAI of the participating network to discover H-SMF 609 in the participating network and the AMF 605 determines the S-NSSAI of the hosting network that is mapped to the S-NSSAI of the participating network. The AMF 605 inserts the determined (or selected) S-NSSAI of the hosting network, in addition to the request message sent to the V-SMF 607, over the N11 interface. The AMF 605 may use the service operation Nsmf_PDUSession_CreateSMContext.

At 3 (see messaging 606), the AMF 605 uses the service operation Nsmf_PDUSession_CreateSMContext to initiate the establishment of the PDU Session towards the V-SMF 607. Th AMF 605 sends a request message including at least the following parameters: PDU Session ID, VPLMN S-NSSIA = Hosting NW S-NSSAI, HPLMN S-NSSAI = Participating NW S-NSSAI, selected DNN, and/or N1 SM container (PDU Session establishment request).

In one embodiment, the AMF 605 includes both network slice values - the S-NSSAI of the hosting network to be used by the V-SMF 607 (e.g., as value of the VPLMN S-NSSAI) and the S-NSSAI of the participating network to be used by the H-SMF 609 (e.g., as value of the HPLMN S-NSSAI).

At 4 (see messaging 608), in one embodiment, the V-SMF 607 processes the request to select a UPF in the hosting network for the PDU Session and forwards further the PDU Session request to the H-SMF 609. The V-SMF 607 uses the Nsmf_PDUSession_CreateSMContext service operation and includes in the request message at least the following parameters: PDU Session ID, HPLMN S-NSSAI = Participating NW S-NSSAI, selected DNN, and/or N1 SM container (PDU Session establishment request).

At 5 (see block 610), the H-SMF 609 retrieves the SM subscription data for the UE 601 and for the combination of S-NSSAI of the participating network and DNN. The H-SMF 609 performs SM policy establishment with a H-PCF. The H-SMF 609 selects a UPF and performs user plane resource configuration with the selected UPF in the participating network.

At 6 (see messaging 612), in one embodiment, the H-SMF 609 uses the Nsmf_PDUSession_CreateSMContext service operation to send a response message to the V-SFM 607. The response message includes the N1 SM container to be sent to the UE 601.

At 7 (see messaging 614), in one embodiment, the V-SMF 607 creates an N2 SM information container and updates the configuration of the UPF in the hosting network. The V-SMF 607 uses the Namf_Communication_N1N2MessageTransfer service operation to the AMF 605 to send a request message to transmit the N2 SM information to the RAN 603 and the N1 SM container to the UE 601. In one embodiment, the N2 SM information includes at least the following parameters: PDU Session ID, CN Tunnel Info for the N3 tunnel, one or multiple quality of service (QoS) profiles and the corresponding QoS flow identifiers (QFIs), and/or the S-NSSAI of the H=hosting network. In one embodiment, the S-NSSAI of the hosting network is the S-NSSAI that was received in step 3 as the S-NSSAI of the hosting network to be used by the V-SMF 607 (e.g., as value of the VPLMN S-NSSAI).

At 8 (see messaging 616), in one embodiment, the AMF 605 sends N2 downlink message to the RAN 603, which includes the N2 SM information message and the N1 SM container to be transmitted to the UE 601. In one embodiment, the N1 SM container transmitted from the RAN 603 to the UE 601 includes the PDU Session Establishment accept message containing at least a PDU Session ID, the S-NSSAI of the participating network to be used by the H-SMF 609 (e.g., as value of the HPLMN S-NSSAI), one or more QoS rules, and/or the like.

In this manner, the PDU Session is established as a home-routed PDU Session to the participating network; however, from the UE side this is a PDU Session in non-roaming case (e.g., as if the UE establishes the PDU Session to the HPLMN).

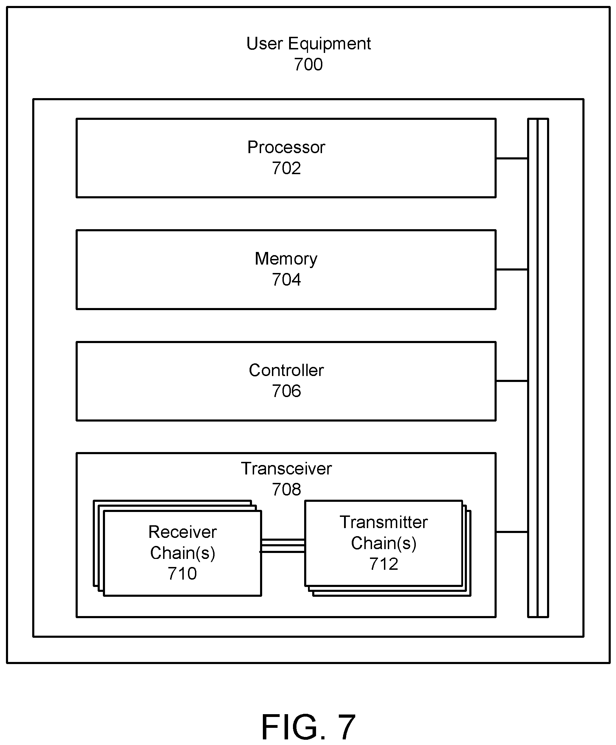

Figure 7 illustrates an example of a UE 700 in accordance with aspects of the present disclosure. The UE 700 may include a processor 702, a memory 704, a controller 706, and a transceiver 708. The processor 702, the memory 704, the controller 706, or the transceiver 708, or various combinations thereof or various components thereof may be examples of means for performing various aspects of the present disclosure as described herein. These components may be coupled (e.g., operatively, communicatively, functionally, electronically, electrically) via one or more interfaces.

The processor 702, the memory 704, the controller 706, or the transceiver 708, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 702 may include an intelligent hardware device (e.g., a general-purpose processor, a DSP, a CPU, an ASIC, an FPGA, or any combination thereof). In some implementations, the processor 702 may be configured to operate the memory 704. In some other implementations, the memory 704 may be integrated into the processor 702. The processor 702 may be configured to execute computer-readable instructions stored in the memory 704 to cause the UE 700 to perform various functions of the present disclosure.

The memory 704 may include volatile or non-volatile memory. The memory 704 may store computer-readable, computer-executable code including instructions when executed by the processor 702 cause the UE 700 to perform various functions described herein. The code may be stored in a non-transitory computer-readable medium such the memory 704 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 702 and the memory 704 coupled with the processor 702 may be configured to cause the UE 700 to perform one or more of the functions described herein (e.g., executing, by the processor 702, instructions stored in the memory 704). For example, the processor 702 may support wireless communication at the UE 700 in accordance with examples as disclosed herein.

The controller 706 may manage input and output signals for the UE 700. The controller 706 may also manage peripherals not integrated into the UE 700. In some implementations, the controller 706 may utilize an operating system such as iOS^{®}, ANDROID^{®}, WINDOWS^{®}, or other operating systems. In some implementations, the controller 706 may be implemented as part of the processor 702.

In some implementations, the UE 700 may include at least one transceiver 708. In some other implementations, the UE 700 may have more than one transceiver 708. The transceiver 708 may represent a wireless transceiver. The transceiver 708 may include one or more receiver chains 710, one or more transmitter chains 712, or a combination thereof.

A receiver chain 710 may be configured to receive signals (e.g., control information, data, packets) over a wireless medium. For example, the receiver chain 710 may include one or more antennas for receiving the signal over the air or wireless medium. The receiver chain 710 may include at least one amplifier (e.g., a low-noise amplifier (LNA)) configured to amplify the received signal. The receiver chain 710 may include at least one demodulator configured to demodulate the received signal and obtain the transmitted data by reversing the modulation technique applied during transmission of the signal. The receiver chain 710 may include at least one decoder for decoding and processing the demodulated signal to receive the transmitted data.

A transmitter chain 712 may be configured to generate and transmit signals (e.g., control information, data, packets). The transmitter chain 712 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 712 may also include at least one power amplifier configured to amplify the modulated signal to an appropriate power level suitable for transmission over the wireless medium. The transmitter chain 712 may also include one or more antennas for transmitting the amplified signal into the air or wireless medium.

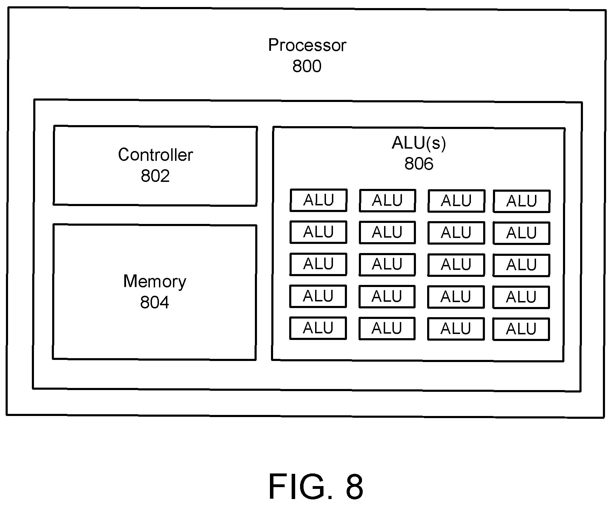

Figure 8 illustrates an example of a processor 800 in accordance with aspects of the present disclosure. The processor 800 may be an example of a processor configured to perform various operations in accordance with examples as described herein. The processor 800 may include a controller 802 configured to perform various operations in accordance with examples as described herein. The processor 800 may optionally include at least one memory 804, which may be, for example, an L1/L2/L3 cache. Additionally, or alternatively, the processor 800 may optionally include one or more arithmetic-logic units (ALUs) 806. One or more of these components may be in electronic communication or otherwise coupled (e.g., operatively, communicatively, functionally, electronically, electrically) via one or more interfaces (e.g., buses).

The processor 800 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 800) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 802 may be configured to manage and coordinate various operations (e.g., signaling, receiving, obtaining, retrieving, transmitting, outputting, forwarding, storing, determining, identifying, accessing, writing, reading) of the processor 800 to cause the processor 800 to support various operations in accordance with examples as described herein. For example, the controller 802 may operate as a control unit of the processor 800, generating control signals that manage the operation of various components of the processor 800. These control signals include enabling or disabling functional units, selecting data paths, initiating memory access, and coordinating timing of operations.

The controller 802 may be configured to fetch (e.g., obtain, retrieve, receive) instructions from the memory 804 and determine subsequent instruction(s) to be executed to cause the processor 800 to support various operations in accordance with examples as described herein. The controller 802 may be configured to track memory address of instructions associated with the memory 804. The controller 802 may be configured to decode instructions to determine the operation to be performed and the operands involved. For example, the controller 802 may be configured to interpret the instruction and determine control signals to be output to other components of the processor 800 to cause the processor 800 to support various operations in accordance with examples as described herein. Additionally, or alternatively, the controller 802 may be configured to manage flow of data within the processor 800. The controller 802 may be configured to control transfer of data between registers, arithmetic logic units (ALUs), and other functional units of the processor 800.

The memory 804 may include one or more caches (e.g., memory local to or included in the processor 800 or other memory, such RAM, ROM, DRAM, SDRAM, SRAM, MRAM, flash memory, etc. In some implementations, the memory 804 may reside within or on a processor chipset (e.g., local to the processor 800). In some other implementations, the memory 804 may reside external to the processor chipset (e.g., remote to the processor 800).

The memory 804 may store computer-readable, computer-executable code including instructions that, when executed by the processor 800, cause the processor 800 to perform various functions described herein. The code may be stored in a non-transitory computer-readable medium such as system memory or another type of memory. The controller 802 and/or the processor 800 may be configured to execute computer-readable instructions stored in the memory 804 to cause the processor 800 to perform various functions. For example, the processor 800 and/or the controller 802 may be coupled with or to the memory 804, the processor 800, the controller 802, and the memory 804 may be configured to perform various functions described herein. In some examples, the processor 800 may include multiple processors and the memory 804 may include multiple memories. One or more of the multiple processors may be coupled with one or more of the multiple memories, which may, individually or collectively, be configured to perform various functions herein.

The one or more ALUs 806 may be configured to support various operations in accordance with examples as described herein. In some implementations, the one or more ALUs 806 may reside within or on a processor chipset (e.g., the processor 800). In some other implementations, the one or more ALUs 806 may reside external to the processor chipset (e.g., the processor 800). One or more ALUs 806 may perform one or more computations such as addition, subtraction, multiplication, and division on data. For example, one or more ALUs 806 may receive input operands and an operation code, which determines an operation to be executed. One or more ALUs 806 be configured with a variety of logical and arithmetic circuits, including adders, subtractors, shifters, and logic gates, to process and manipulate the data according to the operation. Additionally, or alternatively, the one or more ALUs 806 may support logical operations such as AND, OR, exclusive-OR (XOR), not-OR (NOR), and not-AND (NAND), enabling the one or more ALUs 806 to handle conditional operations, comparisons, and bitwise operations.

The processor 800 may support wireless communication in accordance with examples as disclosed herein. In one embodiment, the processor 800 may be configured to or operable to support a means to receive a first message for registering a UE with a participating network associated with a hosting network, transmit a second message comprising assistance information based at least in part on the received first message, wherein the assistance information comprises allowed NSSAI for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network, and transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.

In one embodiment, the network entity comprises an AMF and wherein the second network entity comprises one or more of a base station, a PCF, a unified data management, or a unified data repository.

In one embodiment, the corresponding allowed NSSAI or the corresponding partial allowed NSSAI associated with the hosting network comprises a single-NSSAI (S-NSSAI) associated with the hosting network and maps to at least one S-NSSAI associated with the participating network and the allowed NSSAI for the UE includes the at least one S-NSSAI associated with the participating network.

In one embodiment, the processor 800 may be configured to support a means to determine whether the network entity supports a functionality based at least in part on the hosting network, wherein the functionality comprises serving the UE.

In one embodiment, the processor 800 may be configured to support a means to determine whether to provide a configured NSSAI associated with the hosting network to the UE or determine NSAG information for the UE, wherein the NSAG information comprises a mapping of an NSAG identifier for the hosting network to a respective NSSAI for the participating network.

In one embodiment, the NSAG identifier corresponds to a single NSSAI (S-NSSAI) for the hosting network; and the S-NSSAI maps to a respective S-NSSAI for the participating network.

In one embodiment, the processor 800 may be configured to support a means to output a configuration for the UE to exclude NSSAI in AS signaling.

In one embodiment, the processor 800 may be configured to support a means to refrain from outputting to the UE, a configured NSSAI for the hosting network based at least in part on the first message excluding an NSSAI.

In one embodiment, the processor 800 may be configured to support a means to reject a requested single NSSAI (S-NSSAI) associated with the participating network in response to the requested S-NSSAI not being supported in the hosting network.

In one embodiment, the processor 800 may be configured to support a means to reject the requested S-NSSAI in response to the requested S-NSSAI not being mappable to a corresponding S-NSSAI associated with the hosting network.

In one embodiment, during PDU session establishment procedure, the NE 900 may be configured to support a means to determine an S-NSSAI of the hosting network that maps to an S-NSSAI of the participating network and include the determined S-NSSAI of the hosting network in a message to a SMF of the hosting network.

In one embodiment, the first message comprises a registration request message, and wherein the second message comprises a registration accept message.

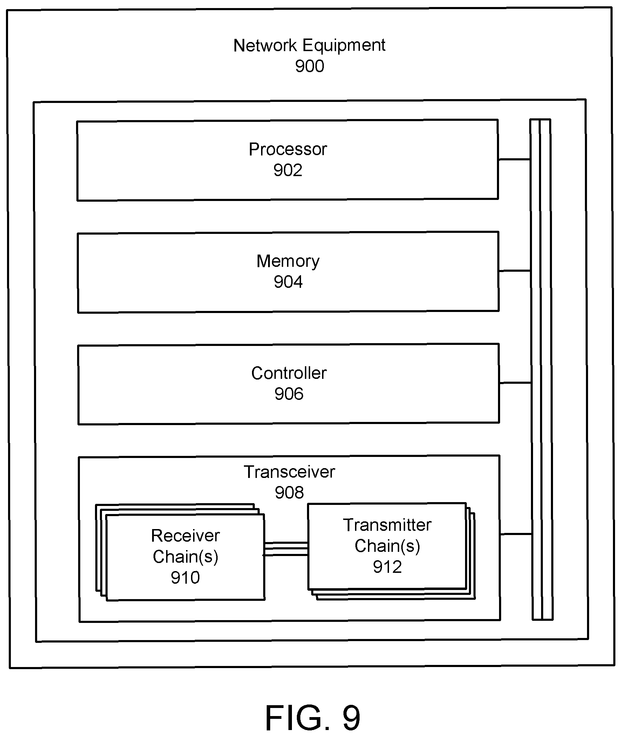

Figure 9 illustrates an example of a NE 900 in accordance with aspects of the present disclosure. The NE 900 may include a processor 902, a memory 904, a controller 906, and a transceiver 908. The processor 902, the memory 904, the controller 906, or the transceiver 908, or various combinations thereof or various components thereof may be examples of means for performing various aspects of the present disclosure as described herein. These components may be coupled (e.g., operatively, communicatively, functionally, electronically, electrically) via one or more interfaces.

The processor 902, the memory 904, the controller 906, or the transceiver 908, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The NE 900 may be configured to support a means to determine a NES mode for the NE, the NES mode comprising a DU-specific mode or an RU-specific mode of a distributed architecture, determine an NES class and an NES configuration for a traffic flow associated with the NE based on the NES mode, the NES class associated with a QoS class for the traffic flow, map the traffic flow to a DU, an RU, or a combination thereof based on the NES class associated with the traffic flow, and transmit the NES configuration to the DU, the RU, or the combination thereof mapped to the traffic flow.

In one embodiment, the NE 900 may be configured to support a means to receive a first message for registering a UE with a participating network associated with a hosting network, transmit a second message comprising assistance information based at least in part on the received first message, wherein the assistance information comprises allowed NSSAI for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network, and transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.

In one embodiment, the network entity comprises an AMF and wherein the second network entity comprises one or more of a base station, a PCF, a unified data management, or a unified data repository.

In one embodiment, the corresponding allowed NSSAI or the corresponding partial allowed NSSAI associated with the hosting network comprises a single-NSSAI (S-NSSAI) associated with the hosting network and maps to at least one S-NSSAI associated with the participating network and the allowed NSSAI for the UE includes the at least one S-NSSAI associated with the participating network.

In one embodiment, the NE 900 may be configured to support a means to determine whether the network entity supports a functionality based at least in part on the hosting network, wherein the functionality comprises serving the UE.

In one embodiment, the NE 900 may be configured to support a means to determine whether to provide a configured NSSAI associated with the hosting network to the UE or determine NSAG information for the UE, wherein the NSAG information comprises a mapping of an NSAG identifier for the hosting network to a respective NSSAI for the participating network.

In one embodiment, the NSAG identifier corresponds to a single NSSAI (S-NSSAI) for the hosting network; and the S-NSSAI maps to a respective S-NSSAI for the participating network.

In one embodiment, the NE 900 may be configured to support a means to output a configuration for the UE to exclude NSSAI in AS signaling.

In one embodiment, the NE 900 may be configured to support a means to refrain from outputting to the UE, a configured NSSAI for the hosting network based at least in part on the first message excluding an NSSAI.

In one embodiment, the NE 900 may be configured to support a means to reject a requested single NSSAI (S-NSSAI) associated with the participating network in response to the requested S-NSSAI not being supported in the hosting network.

In one embodiment, the NE 900 may be configured to support a means to reject the requested S-NSSAI in response to the requested S-NSSAI not being mappable to a corresponding S-NSSAI associated with the hosting network.

In one embodiment, during PDU session establishment procedure, the NE 900 may be configured to support a means to determine an S-NSSAI of the hosting network that maps to an S-NSSAI of the participating network and include the determined S-NSSAI of the hosting network in a message to a SMF of the hosting network.

In one embodiment, the first message comprises a registration request message, and wherein the second message comprises a registration accept message.

The processor 902 may include an intelligent hardware device (e.g., a general-purpose processor, a DSP, a CPU, an ASIC, an FPGA, or any combination thereof). In some implementations, the processor 902 may be configured to operate the memory 904. In some other implementations, the memory 904 may be integrated into the processor 902. The processor 902 may be configured to execute computer-readable instructions stored in the memory 904 to cause the NE 900 to perform various functions of the present disclosure.

The memory 904 may include volatile or non-volatile memory. The memory 904 may store computer-readable, computer-executable code including instructions when executed by the processor 902 causes the NE 900 to perform various functions described herein. The code may be stored in a non-transitory computer-readable medium such the memory 904 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 902 and the memory 904 coupled with the processor 902 may be configured to cause the NE 900 to perform one or more of the functions described herein (e.g., executing, by the processor 902, instructions stored in the memory 904). For example, the processor 902 may support wireless communication at the NE 900 in accordance with examples as disclosed herein.

The controller 906 may manage input and output signals for the NE 900. The controller 906 may also manage peripherals not integrated into the NE 900. In some implementations, the controller 906 may utilize an operating system such as iOS^{®}, ANDROID^{®}, WINDOWS^{®}, or other operating systems. In some implementations, the controller 906 may be implemented as part of the processor 902.

In some implementations, the NE 900 may include at least one transceiver 908. In some other implementations, the NE 900 may have more than one transceiver 908. The transceiver 908 may represent a wireless transceiver. The transceiver 908 may include one or more receiver chains 910, one or more transmitter chains 912, or a combination thereof.

A receiver chain 910 may be configured to receive signals (e.g., control information, data, packets) over a wireless medium. For example, the receiver chain 910 may include one or more antennas for receiving the signal over the air or wireless medium. The receiver chain 910 may include at least one amplifier (e.g., a low-noise amplifier (LNA)) configured to amplify the received signal. The receiver chain 910 may include at least one demodulator configured to demodulate the received signal and obtain the transmitted data by reversing the modulation technique applied during transmission of the signal. The receiver chain 910 may include at least one decoder for decoding and processing the demodulated signal to receive the transmitted data.

A transmitter chain 912 may be configured to generate and transmit signals (e.g., control information, data, packets). The transmitter chain 912 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 912 may also include at least one power amplifier configured to amplify the modulated signal to an appropriate power level suitable for transmission over the wireless medium. The transmitter chain 912 may also include one or more antennas for transmitting the amplified signal into the air or wireless medium.

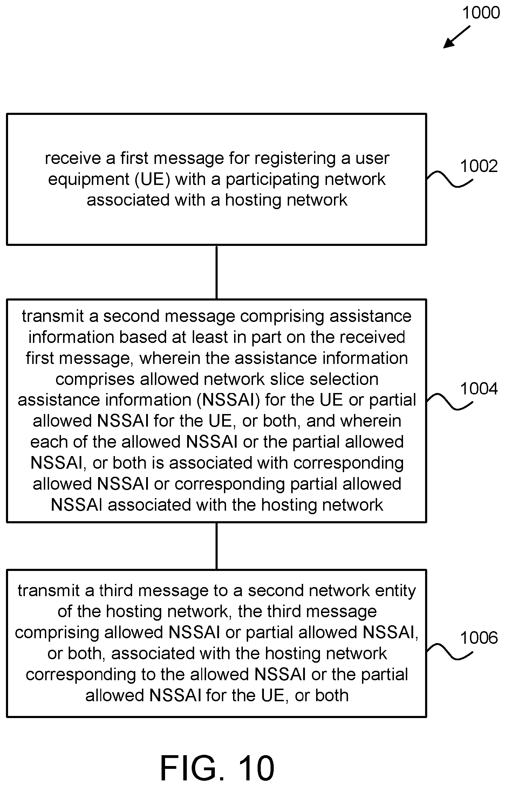

Figure 10 illustrates a flowchart of a method in accordance with aspects of the present disclosure. The operations of the method may be implemented by an NE as described herein. In some implementations, the NE may execute a set of instructions to control the function elements of the NE to perform the described functions.

At 1002, the method may receive a first message for registering a UE with a participating network associated with a hosting network. The operations of 1002 may be performed in accordance with examples as described herein. In some implementations, aspects of the operations of 1002 may be performed by the NE as described with reference to Figure 9.

At 1004, the method may transmit a second message comprising assistance information based at least in part on the received first message, wherein the assistance information comprises allowed NSSAI for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network. The operations of 1004 may be performed in accordance with examples as described herein. In some implementations, aspects of the operations of 1004 may be performed by the NE as described with reference to Figure 9.

At 1006, the method may transmit a third message to a second network entity of the hosting network, the third message comprising allowed NSSAI or partial allowed NSSAI, or both, associated with the hosting network corresponding to the allowed NSSAI or the partial allowed NSSAI for the UE, or both. The operations of 1006 may be performed in accordance with examples as described herein. In some implementations, aspects of the operations of 1006 may be performed by the NE as described with reference to Figure 9.

It should be noted that the method described herein describes a possible implementation, and that the operations and the steps may be rearranged or otherwise modified and that other implementations are possible.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Examples according to the present disclosure are set out in the following numbered clauses:
1. A network entity, comprising:
   at least one memory; and
   at least one processor coupled with the at least one memory and configured to cause the network entity to:
      receive a first message for registering a user equipment (UE) with a participating network associated with a hosting network; and
      transmit a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
      transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.
2. The network entity of clause 1, wherein the network entity comprises an access and mobility management function (AMF) and wherein the second network entity comprises one or more of a base station, a policy control function (PCF), a unified data management, or a unified data repository.
3. The network entity of clause 1 or clause 2, wherein:
   the corresponding allowed NSSAI or the corresponding partial allowed NSSAI associated with the hosting network comprises a single-NSSAI (S-NSSAI) associated with the hosting network and maps to at least one S-NSSAI associated with the participating network; and
   the allowed NSSAI for the UE includes the at least one S-NSSAI associated with the participating network.
4. The network entity of any preceding clause, wherein the at least one processor is configured to cause the network entity to:
   determine whether the network entity supports a functionality based at least in part on the hosting network, wherein the functionality comprises serving the UE.
5. The network entity of clause 4, wherein the at least one processor is configured to cause the network entity to:
   determine whether to provide a configured NSSAI associated with the hosting network to the UE; or
   determine network slice access stratum group (NSAG) information for the UE, wherein the NSAG information comprises a mapping of an NSAG identifier for the hosting network to a respective NSSAI for the participating network.
6. The network entity of clause 5, wherein:
   the NSAG identifier corresponds to a single NSSAI (S-NSSAI) for the hosting network; and the S-NSSAI maps to a respective S-NSSAI for the participating network.
7. The network entity of any preceding clause, wherein the at least one processor is configured to cause the network entity to:
   output a configuration for the UE to exclude NSSAI in access stratum (AS) signaling.
8. The network entity of any preceding clause, wherein the at least one processor is configured to cause the network entity to:
   refrain from outputting, to the UE, a configured NSSAI for the hosting network based at least in part on the first message excluding an NSSAI.
9. The network entity of any preceding clause, wherein the at least one processor is configured to cause the network entity to:
   reject a requested single NSSAI (S-NSSAI) associated with the participating network in response to the requested S-NSSAI not being supported in the hosting network.
10. The network entity of clause 9, wherein the at least one processor is configured to cause the network entity to:
   reject the requested S-NSSAI in response to the requested S-NSSAI not being mappable to a corresponding S-NSSAI associated with the hosting network.
11. The network entity of any preceding clause, wherein, during protocol data unit (PDU) session establishment procedure, the at least one processor is configured to cause the network entity to:
   determine a single NSSAI (S-NSSAI) of the hosting network that maps to an S-NSSAI of the participating network; and
   include the determined S-NSSAI of the hosting network in a message to a session management function (SMF) of the hosting network.
12. The network entity of any preceding clause, wherein the first message comprises a registration request message, and wherein the second message comprises a registration accept message.
13. A processor for wireless communication, comprising:
   at least one controller coupled with at least one memory and configured to cause the processor to:
   receive a first message for registering a user equipment (UE) with a participating network associated with a hosting network;
   transmit a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
   transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.
14. The processor of clause 13, wherein the network entity comprises an access and mobility management function (AMF) and wherein the second network entity comprises one or more of a base station, a policy control function (PCF), a unified data management, or a unified data repository.
15. The processor of clause 13 or clause 14, wherein:
   the corresponding allowed NSSAI or the corresponding partial allowed NSSAI associated with the hosting network comprises a single-NSSAI (S-NSSAI) associated with the hosting network and maps to at least one S-NSSAI associated with the participating network; and
   the allowed NSSAI for the UE includes the at least one S-NSSAI associated with the participating network.
16. The processor of any of clauses 13 to 15, wherein the at least one controller is configured to cause the processor to:
   determine whether a network entity supports a functionality based at least in part on the hosting network, wherein the functionality comprises serving the UE.
17. The processor of clause 16, wherein the at least one controller is configured to cause the processor to:
   determine whether to provide a configured NSSAI associated with the hosting network to the UE; or
   determine network slice access stratum group (NSAG) information for the UE, wherein the NSAG information comprises a mapping of an NSAG identifier for the hosting network to a respective NSSAI for the participating network.
18. The processor of clause 17, wherein:
   the NSAG identifier corresponds to a single NSSAI (S-NSSAI) for the hosting network; and the S-NSSAI maps to a respective S-NSSAI for the participating network.
19. The processor of any of clauses 13 to 18, wherein the at least one controller is configured to cause the processor to:
   output a configuration for the UE to exclude NSSAI in access stratum (AS) signaling.
20. A method performed by a network entity, the method comprising:
   receiving a first message for registering a user equipment (UE) with a participating network associated with a hosting network; and
   transmitting a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
   transmitting a third message to a second network entity of the hosting network, the third message comprising allowed NSSAI or partial allowed NSSAI, or both, associated with the hosting network corresponding to the allowed NSSAI or the partial allowed NSSAI for the UE, or both.

## Claims

1. A network entity for wireless communication and configured to:
receive a first message for registering a user equipment (UE) with a participating network associated with a hosting network; and
transmit a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.

2. The network entity of claim 1, wherein the network entity comprises an access and mobility management function (AMF), and wherein the second network entity comprises one or more of a base station, a policy control function (PCF), a unified data management, or a unified data repository.

3. The network entity of claim 1 or claim 2, wherein:
the corresponding allowed NSSAI or the corresponding partial allowed NSSAI associated with the hosting network comprises a single-NSSAI (S-NSSAI); and
the allowed NSSAI for the UE includes the at least one S-NSSAI.

4. The network entity of any preceding claim, further configured to determine whether the network entity supports a functionality based at least in part on the hosting network.

5. The network entity of claim 4, further configured to:
determine whether to provide a configured NSSAI associated with the hosting network to the UE; or
determine network slice access stratum group (NSAG) information for the UE, wherein the NSAG information comprises a mapping of an NSAG identifier for the hosting network to a respective NSSAI for the participating network.

6. The network entity of claim 5, wherein the NSAG identifier corresponds to a single NSSAI (S-NSSAI) for the hosting network.

7. The network entity of any preceding claim, further configured to output a configuration for the UE to exclude NSSAI in access stratum (AS) signaling.

8. The network entity of any preceding claim, further configured to refrain from outputting a configured NSSAI for the hosting network based at least in part on the first message excluding an NSSAI.

9. The network entity of any preceding claim, further configured to reject a requested single NSSAI (S-NSSAI) associated with the participating network in response to the requested S-NSSAI not being supported in the hosting network.

10. The network entity of any preceding claim, further configured to:
determine a single NSSAI (S-NSSAI) of the hosting network that maps to an S-NSSAI of the participating network; and
include the determined S-NSSAI of the hosting network in a message to a session management function (SMF) of the hosting network.

11. The network entity of any preceding claim, wherein the first message comprises a registration request message, and wherein the second message comprises a registration accept message.

12. A method performed by a network entity, the method comprising:
receiving a first message for registering a user equipment (UE) with a participating network associated with a hosting network; and
transmitting a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
transmitting a third message to a second network entity of the hosting network, the third message comprising allowed NSSAI or partial allowed NSSAI, or both, associated with the hosting network corresponding to the allowed NSSAI or the partial allowed NSSAI for the UE, or both.

13. The method of claim 12, wherein the network entity comprises an access and mobility management function (AMF), and wherein the second network entity comprises one or more of a base station, a policy control function (PCF), a unified data management, or a unified data repository.

14. The method of claim 12 or claim 13, wherein the first message comprises a registration request message, and wherein the second message comprises a registration accept message.

15. A processor for wireless communication, comprising:
at least one controller coupled with at least one memory and configured to cause the processor to:
receive a first message for registering a user equipment (UE) with a participating network associated with a hosting network;
transmit a second message comprising assistance information based at least in part on the received first message, wherein the assistance information comprises allowed network slice selection assistance information (NSSAI) for the UE or partial allowed NSSAI for the UE, or both, and wherein each of the allowed NSSAI or the partial allowed NSSAI, or both is associated with corresponding allowed NSSAI or corresponding partial allowed NSSAI associated with the hosting network; and
transmit a third message to a second network entity of the hosting network, the third message comprising allowed NSSAI or partial allowed NSSAI, or both, associated with the hosting network corresponding to the allowed NSSAI or the partial allowed NSSAI for the UE, or both.
